**Europäisches Patentamt**

**European Patent Office**

**Office européen des brevets**

(19)

(11) Veröffentlichungsnummer: **0 283 841**
**B1**

(12) **EUROPÄISCHE PATENTSCHRIFT**

(45) Veröffentlichungstag der Patentschrift:
31.10.90

(51) Int. Cl.⁵: **B65G 69/28**

(21) Anmeldenummer: **88103600.8**

(22) Anmeldetag: **08.03.88**

(54) Überfahrbrücke für Rampen.

(30) Priorität: **27.03.87 DE 3710109**

(43) Veröffentlichungstag der Anmeldung:
**28.09.88 Patentblatt 88/39**

(45) Bekanntmachung des Hinweises auf die Patenterteilung:
**31.10.90 Patentblatt 90/44**

(84) Benannte Vertragsstaaten:
**AT BE CH DE ES FR GB GR IT LI LU NL SE**

(56) Entgegenhaltungen:
**DE-C- 2 800 128**

(73) Patentinhaber: **Alten, Kurt, Ringstrasse 14,
D-3015 Wennigsen(DE)**

(72) Erfinder: **Alten, Kurt, Ringstrasse 14,
D-3015 Wennigsen(DE)**

(74) Vertreter: **Depmeyer, Lothar, Auf der Höchte 30,
D-3008 Garbsen 1(DE)**

# Beschreibung

Die Erfindung betrifft eine Überfahrbrücke für Rampen nach dem Gattungsbegriff des Patentanspruchs 1.

Bei den bekannten Überfahrbrücken dieser Art (DE-PS 2 800 128) wird die Rückstellkraft von einer Zugfeder bewirkt, die dem Hub der Zungen entsprechend lang ausgeführt sein muss. Der aufgrund des bekannten Vorschlages vorhandene Anschlag hat hierbei die Aufgabe, die Hemmung bzw. die Bremse zu betätigen.

Der Erfindung liegt im wesentlichen die Aufgabe zugrunde, die eingangs erwähnten Überfahrbrücken so auszubilden, dass auf die erwähnte lange Zugfeder verzichtet werden kann und zudem lösbare Bremsen bzw. Hemmungen in Fortfall kommen können, um so bei grösserer Betriebssicherheit die Vorrichtung technisch einfacher gestalten zu können.

Zur Lösung dieser Aufgabe sind erfindungsgemäss die Zungen durch einen beim Einstossen und beim Auftreffen auf den Anschlag überwindbaren Reibungsschluss gehalten.

Demgemäss werden die Zungen nicht durch eine lösbare Hemmung od. dgl., sondern dadurch gehalten, dass sie nur unter Überwindung eines Reibungsschlusses bewegt werden können, der sowohl für die eine als auch für die andere Bewegungsrichtung der Zungen, also für die Einstossrichtung als auch für die Rückführrichtung gleichermassen wirksam ist. Dieser Reibungsschluss, der durch ein einfaches Pressglied bewirkt werden kann, muss natürlich so gross sein, dass ungewollte Bewegungen der Zungen z.B. beim Hochschwenken der Brückenplatte oder bei betrieblichen Erschütterungen nicht eintreten können.

Während das Einstossen der Zungen in bekannter Weise durch Ausfahren der Verlängerung bzw. Heranfahren des zu be- bzw. entladenden LKW od. dgl. geschieht, erfolgt die Rückführung der Zungen durch die Rückführung der Verlängerung in die Ruhelage, wobei die Zungen an einen festen Anschlag der Brückenplatte gelangen, der zu einer Relativbewegung der Zungen in Bezug auf die Verlängerung führt. Ist die Verlängerung in ihre Endstellung gelangt, so hat auch die vorher eingestossene Zunge wieder ihre Normalstellung erreicht.

Weitere Einzelheiten der in den Ansprüchen definierten Erfindung werden anhand der Zeichnung erläutert, in der ein Ausführungsbeispiel der Erfindung dargestellt ist.

Es zeigen :

Fig. 1 eine Überfahrbrücke für Rampen im Längsteilschnitt mit eingefahrener Verlängerung,

Fig. 2 die Brücke gemäss Fig. 1 ebenfalls im Teillängsschnitt, und zwar bei ausgefahrener Verlängerung,

Fig. 3 eine Teildraufsicht auf die Brücke gemäss Fig. 2 und

Fig. 4 einen Schnitt nach der Linie IV - IV von Fig. 2.

Die in Kastenbauweise ausgeführte Brückenplatte 1 ist an ihrem rampenseitigen, hinteren Ende um eine waagerechte Achse 2 an der Rampe 3 verschwenkbar gelagert. Der dazu benötigte Hubzylinder ist nicht dargestellt. Am freien Ende der Brückenplatte 1 ist längsverschiebbar eine Verlängerung 4 gelagert, die einen an der Brückenplatte 1 gelagerten Schlitten 5 und davor einen zur Auflage auf der zu be- bzw. entladenden Plattform dienenden Abschnitt 6 aufweist, der nach hinten zum Schlitten 5 hin durch einen senkrechten Schild 7 begrenzt ist. Die Verlängerung 4 wird in üblicher Weise durch einen Vorschubzylinder hin- und herbewegt, der nicht dargestellt ist.

An beiden seitlichen Rändern der Verlängerung 4 ist diese mit einer rechteckigen Ausnehmung versehen, die von einer längs zur Verlängerung 4 bzw. längs zur Brückenplatte 1 einstossbaren ( gestrichelt wiedergegebenen ) Zunge 8 ausgefüllt ist. Dieses Einstossen erfolgt, wenn die Gesamtbreite der Verlängerung 4 in Bezug auf die Breite der Plattform zu gross ist. Das Einstossen kann dabei durch Einwirkung der Plattform bzw. ihrer Seitenwände oder aber auch durch Vorfahren der Verlängerung 4 bis zum Anschlag der Zungen 8 an den Seitenwänden der Plattform geschehen.

Die Zunge 8 besteht im wesentlichen aus einer Formteil 9 in der Grösse der beiden seitlichen Ausnehmungen und einer zur Halterung des Formteils 9 dienenden Führung 10 in Form eines etwa rechteckigen oder quadratischen festen Stabes , der eine seinem Querschnitt entsprechende Aussparung 11 im Schild 7 durchsetzt und in seinem hinteren Bereich oben an einer Führungsrolle 12 anliegt. Im Bereich des Schildes 7 wird der Stab 10 von unten von einem federbelasteten Gleitstein 13 beaufschlagt, der die oberen Flächen der Zunge 8 und diejenigen des Stabes 10 derart gegen die benachbarten Teile der Überfahrbrücke anpresst, dass die Zunge 8 nur unter Überwindung der so erzeugten Reibung verschoben werden kann, wobei diese Reibung so gross ist, dass Erschütterungen, Neigungen oder andere Einflüsse ausserstande sind, die Zunge 8 zu verschieben.

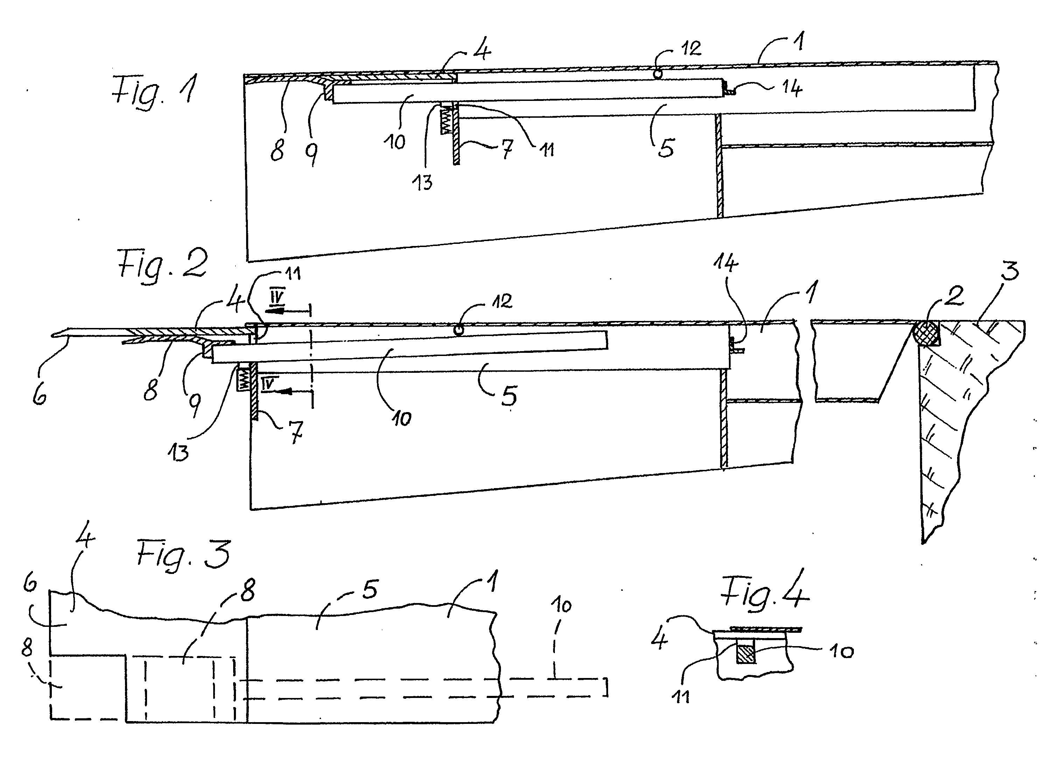

Im eingefahrenen Zustand der Verlängerung 4 gemäss Fig. 1 schliesst die vordere Kante des Formteils 9 mit derjenigen der Verlängerung 4 bzw. seines Abschnittes 6 ab. Wird nun die Verlängerung 4 ausgefahren und dann unter den vorerwähnten Bedingungen die Zunge 8 eingestossen, so kann dies nur gegen den Reibungswiderstand erfolgen, der durch den Gleitstein 13 erzeugt ist, der insb. zwischen dem Formteil 9 einerseits und dem darüber liegenden Teil der Verlängerung 4 wirksam ist.

An der Brückenplatte 1 ist noch ein Anschlag 14 in Form eines quer verlaufenden Winkeleisens vorgesehen. Dieser Anschlag 14 hat folgende Wirkung. Bevor die Verlängerung 4 ihre hintere Endstellung erreicht hat, trifft das hintere Ende des Stabes 10 auf den Anschlag 14. Der Stab 10 und die Zunge 8 verharren dann in ihrer Stellung, bis die Verlängerung 4 ihre hintere Endstellung erreicht ·hat. Auch diese Bewegungsabläufe sind möglich, weil die vom Gleitstein erzeugte Reibungskraft überwunden werden kann. Dabei versteht es sich, dass die Positionierung des Anschlages 14 so erfolgen muss, dass die obigen Bedingungen erfüllt werden können. Dies bedeutet, dass der Anschlag 14 um ein solches Mass gegenüber der Endstellung der Verlängerung 4 gemäss Fig. 1 vorverlegt sein muss, das der Länge des maximalen Einstossweges der Zunge 8 entspricht. Dieses Mass entspricht auch praktisch der Länge der seitlichen Ausnehmungen der Verlängerung 4.

Bei Belastungen der Zunge 8 von oben stützt sich der Stab unten auf dem unteren Rand der Aussparung 11 auf, während das hintere Ende des Stabes 10 in der Rolle 12 ihr Widerlager findet. Daüberhinaus kann auch der Stab 12 zusätzlich noch gegen laterale Bewegungen durch seitliche Backen od. dgl. geschützt sein, damit so eine gute Führung der Zungen 8 möglich ist.

Bedeutungsvoll ist ferner, dass die Kontur der Zunge 8 so ausgeführt wird, dass ihre Oberfläche glatt und stufenlos in diejenige übergeht, die durch den Abschnitt 6 bestimmt ist. Im nicht eingestossenen Zustand sind somit besondere Übergänge nicht vorhanden.

Wichtig ist ferner, dass der vor dem Schild 7 befindliche, durchgehende und nicht mit den seitlichen Ausnehmungen versehene Teil der Verlängerung 4 eine solche Erstreckung in Längsrichtung der Brücke hat, dass das Formteil 8 als die eigentliche Zunge über ihre ganze Länge hinweg vor dem Schild unterhalb der Verlängerung angeordnet werden kann ( vgl. Fig. 2 ). U.a. wird hierdurch die Stabilität des aktiven Teils der Verlängerung 4 wesentlich verbessert. - Der nicht ausgenommene Teil der Verlängerung 4 hat dabei etwa die Länge der Ausnehmung ( Messung in Brückenlängsrichtung ).

## Patentansprüche

1 Überfahrbrücke für Rampen mit einer an ihrem hinteren, rampenseitigen Ende um eine waagerechte Querachse (2) verschwenkbaren Brückenplatte (1), die an ihrem freien Ende mit einer ein- und ausfahrbaren Verlängerung (4) zur Auflage auf der zu be- bzw. entladenden Plattform versehen ist, wobei die Verlängerung (4) eine oder mehrere gegen eine Rückstellkraft einstossbaren Zungen (8) aufweist und an der Brückenplatte (1) ein zur Rückführung der Zungen dienender Anschlag (14) vorgesehen ist, dadurch gekennzeichnet, dass die Zungen (8) durch einen beim Einstossen und beim Auftreffen auf den Anschlag (14) überwindbaren Reibungsschluss zur Verlängerung (4) gehalten ist.

2. Überfahrbrücke nach Anspruch 1, dadurch gekennzeichnet, dass ein unter Federspannung stehender Gleitstein (13) vorgesehen ist, der die Zungen (8) von unten beaufschlagt und vorzugsweise vorwiegend im Bereich der eigentlichen Zunge (9) wirksam ist.

3. Überfahrbrücke nach Anspruch 1, dadurch gekennzeichnet, dass bei eingefahrener Verlängerung (4) die Zunge (8) vorne mit der Verlängerung abschliesst und hinten am Anschlag (14) der Brückenplatte (1) anliegt.

4. Überfahrbrücke nach Anspruch 2, dadurch gekennzeichnet, dass sich der Gleitstein (13) im Bereich eines senkrecht zur Verlängerung (4) verlaufenden Schildes (7) befindet, der sich bei ausgefahrener Verlängerung etwa unterhalb der vorderen Kante der Brückenplatte (1) befindet.

5. Überfahrbrücke nach Anspruch 1, dadurch gekennzeichnet, dass die Verlängerung im Bereich ihres der Rampe (3) zugekehrten Endes unten mit einem quer verlaufenden Schild (7) versehen ist, der sich etwa senkrecht nach unten erstreckt, und dass der gegenüber der Vorderkante der Brückenplatte (1) vorspringende Teil der Verlängerung (4) einen nicht ausgenommenen, sich über die Brückenbreite erstreckenden Abschnitt aufweist, dessen Erstreckung in Brückenlängsrichtung praktisch derjenigen der eigentlichen Zunge ( Formteil 9 ) entspricht, die sich im eingezogenen, eingestossenen Zustand zwischen dem Schild (7) und der Ausnehmung befindet.

## Claims

1. Ramp bridging device, comprising a bridge plate (1), which is pivotable about a horizontal transverse axle (2) at its rear end facing the ramp and is provided at its free end with a retractable and extensible extension portion (4) for support on the platform to be loaded or unloaded, the extension portion (4) having one or more projection members (8), which are insertable in a direction opposite that of a restoring force, and a stop member (14), which serves to return the projection members, is provided on the bridge plate (1), characterised in that the projection members (8) are retained by a frictional connection with the extension portion (4), which connection is releasable upon insertion of said projection members and upon their encountering the stop member (14).

3. Bridging device according to claim 1, characterised in that a spring-loaded slide member (13) is provided, which acts upon the projection members (8) from below and is preferably predominantly effective in the region of the actual projection member (9).

3. Bridging device according to claim 1, characterised in that, when the extension portion (4) is retracted, the front end of the projection member (8) terminates flush with the extension portion, and its rear end abuts against the stop member (14) of the bridge plate (1).

4. Bridging device according to claim 3, characterised in that the slide member (13) is situated in the region of a plate (7), which extends vertically relative to the extension portion (4) and is situated substantially beneath the front edge of the bridge plate (1) when the extension portion has been extended.

5. Bridging device according to claim 1, characterised in that, in the lower region of its end facing the ramp (3), the extension portion is provided with a transversely extending plate (7), which extends substantially vertically downwardly, and in that the part of the extension portion (4) protruding beyond the front edge of the bridge plate (1) has a non-recessed section, which extends over the width of the bridging device and has a length, which extends in the longitudinal direction of the bridging device, corresponding virtually to that of the actual projection member (moulded component part 9), which is situated between the plate (7) and the recess when it is in its retracted, pushed-in position.

## Revendications

1. Passerelle de transbordement pour des quais, comprenant un tablier de passerelle (1) qui peut basculer à son extrémité arrière, du côté du quai, autour d'un axe transversal (2) horizontal et qui est munie, à son extrémité libre, d'un prolongement (1) pouvant s'escamoter et se déployer, afin de s'appliquer sur la plate-forme à charger ou à décharger, le prolongement (4) comportant une ou plusieurs languettes (8) pouvant être rétractées, à l'encontre d'une force de rappel, et il est prévu, sur le tablier de la passerelle (1), une butée (14) servant à ramener les languettes, caractérisée en ce que les languettes (8) sont maintenues, par rapport au prolongement (4), par une force de frottement qui peut être surmontée, lorsqu'elles sont rétractées et lorsqu'elles touchent la butée (14).

2. Passerelle de transbordement suivant la revendication 1, caractérisée en ce qu'il est prévu un coulisseau (13) qui est soumis à la tension d'un ressort, qui s'applique à la languette (8) par le bas et qui, de préférence, est efficace principalement dans la région de la languette proprement dite (9).

3. Passerelle de transbordement suivant la revendication 1, caractérisée en ce que, lorsque le prolongement (4) est escamoté, la languette (8) se termine à l'avant avec le prolongement et s'applique à l'arrière sur la butée (14) du tablier de la passerelle (1).

4. Passerelle de transbordement suivant la revendication 2, caractérisée en ce que le coulisseau (13) se trouve dans la région d'un bouclier (7) s'étendant perpendiculairement au prolongement (4) et se trouvant à peu près en-dessous du bord antérieur du tablier de la passerelle (1), lorsque le prolongement est déployé.

5. Passerelle de transbordement suivant la revendication 1, caractérisée en ce que le prolongement est muni, dans la région de son extrémité tournée vers le quai (3), en bas, d'un bouclier (7) qui s'étend transversalement et qui s'étend vers le bas à peu près verticalement, et en ce que la partie du prolongement (4), en saillie par rapport au bord antérieur du tablier de la passerelle (1), comporte une section non évidée et s'étendant sur la largeur de la passerelle dont l'étendue, dans la direction longitudinale de la passerelle, correspond pratiquement à celle de la languette proprement dite (pièce conformée 9) qui se trouve à l'état retiré et rétracté entre le bouclier (7) et l'évidement.

Fig. 1

Fig. 2

Fig. 3

Fig. 4

EP 0 283 841 B1